Europäisches Patentamt

European Patent Office

Office européen des brevets

(19)

(11) Publication number: **0 294 459 B1**

(12) # EUROPEAN PATENT SPECIFICATION

(45) Date of publication of patent specification :
**25.03.92 Bulletin 92/13**

(51) Int. Cl.⁵ : **H01S 3/08,** G02B 5/08, G02B 1/10

(21) Application number : **88900651.6**

(22) Date of filing : **17.12.87**

(86) International application number :
**PCT/US87/03358**

(87) International publication number :
**WO 88/04847 30.06.88 Gazette 88/14**

(54) **MIRROR ASSEMBLY FOR LASERS.**

(30) Priority : **22.12.86 US 944901**

(43) Date of publication of application :
**14.12.88 Bulletin 88/50**

(45) Publication of the grant of the patent :
**25.03.92 Bulletin 92/13**

(84) Designated Contracting States :
**DE FR GB SE**

(56) References cited :
**GB-A- 2 099 178**
**US-A- 3 853 386**
**US-A- 4 444 467**
**Patents Abstracts of Japan, vol. 9, no. 203**
**(P-381)(1926), 21 August 1985; & JP-A-6066202**

(73) Proprietor : **HONEYWELL INC.**
**Honeywell Plaza**
**Minneapolis Minnesota 55408 (US)**

(72) Inventor : **AHONEN, Robert, G.**
**120 205th Lane Northwest**
**Cedar, MN 55011 (US)**
Inventor : **MALENICK, John**
**2035 Innsbruck Parkway**
**Minneapolis, MN 55421 (US)**

(74) Representative : **Rentzsch, Heinz et al**
**Honeywell Europe S.A. Holding KG Patent-**
**und Lizenzabteilung Kaiserleistrasse 55**
**W-6050 Offenbach am Main (DE)**

**Description**

## BACKGROUND OF THE INVENTION

This invention relates to a novel construction for ring laser angular rates sensors and more particularly to a construction of a mirror assembly for such sensors which is less costly to manufacture than prior art constructions.

After years of development, ring laser angular rate sensors, commonly referred to as ring laser gyros, have become commercially successful products. Today, most commercial ring laser angular rate sensors use a mechanically and thermally stable block construction and mechanical dither concepts taught in U.S. patent 3,390,606, issued to T. Podgorski, and U.S. patent 3,467,472 and 3,373,650, both of which were issued to J. Killpatrick.

These prior art ring laser angular rate sensors have proven highly satisfactory in operation. These prior art ring laser angular rate sensors, however, are costly to manufacture.

A key element of a ring laser angular sensor is the mirror assembly. The mirror assemblies, using prior art construction techniques, include a substrate which is usually of a material which is the same as that chosen for the laser block which contains a cavity filled with gas. The block and mirror substrates may be, for example, Cervit, Zerodur, Fused Silica, BK-7 glass, etc.

The mirror assembly substrates of the prior art have at least one highly polished surface. Multi-layer dielectric coatings are deposited directly on the highly polished substrate surface to form a mirror. See, for example, GB-A-2099178.

As is well known to those skilled in the art, the mirrors are the critical components of a ring laser angular rate sensor. This is so since a poor mirror does not achieve superior reflectivity required by a laser angular rate sensor. Reflectivity of the mirror is normally desired to be 99.9%. Poor reflectivity results in scattering of the laser beams in the ring laser which in turn causes a degradation in rate sensor performance. In order to achieve superior reflectivity, the substrates require extreme measures to achieve an ultra-high polished surface before the coatings are deposited thereon. To achieve an ultra-high polished mirror substrate surface usually requires several days of abrasive polishing.

After the step of ultra-high polishing of the mirror substrate's surface, the multi-layer coatings are deposited. The final step in the mirror assembly process is a quality check. If the mirror assemblies fail the quality check, the polishing step and deposition step must be repeated. For these reasons, the mirror assemblies are very costly to produce.

## SUMMARY OF THE INVENTION

An object of this invention is the provision of a novel construction for a ring laser mirror assembly which permits it to be inexpensively manufactured.

## BRIEF DESCRIPTION OF THE DRAWINGS

Figure 1 is a plan view of a ring laser angular rate sensor.

Figure 2 illustrates a polished silicon wafer having multi-layer dielectric patterns deposited thereon.

Figure 3 illustrates a side view of a mirror chip.

## DETAILED DESCRIPTION OF THE INVENTION

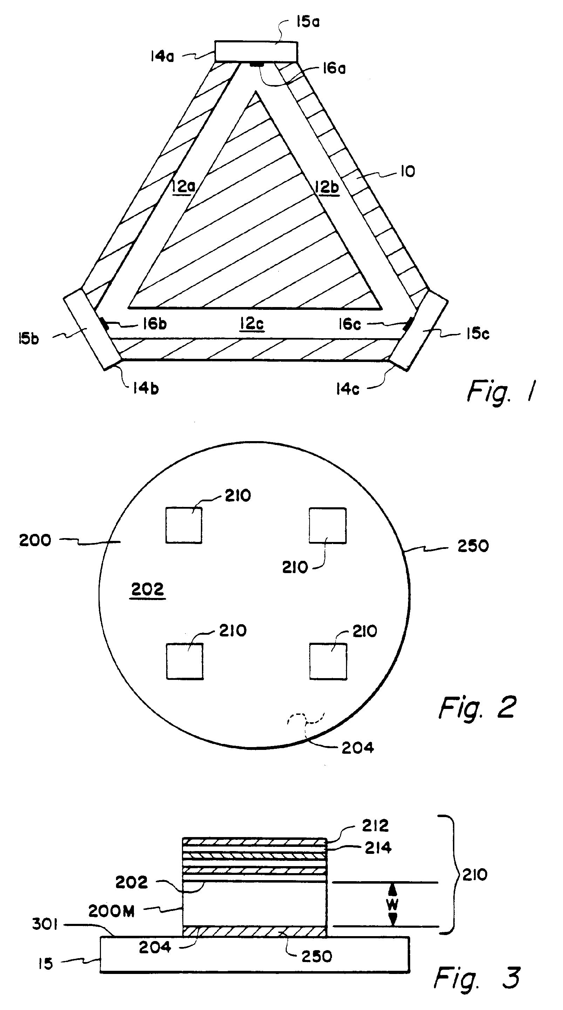

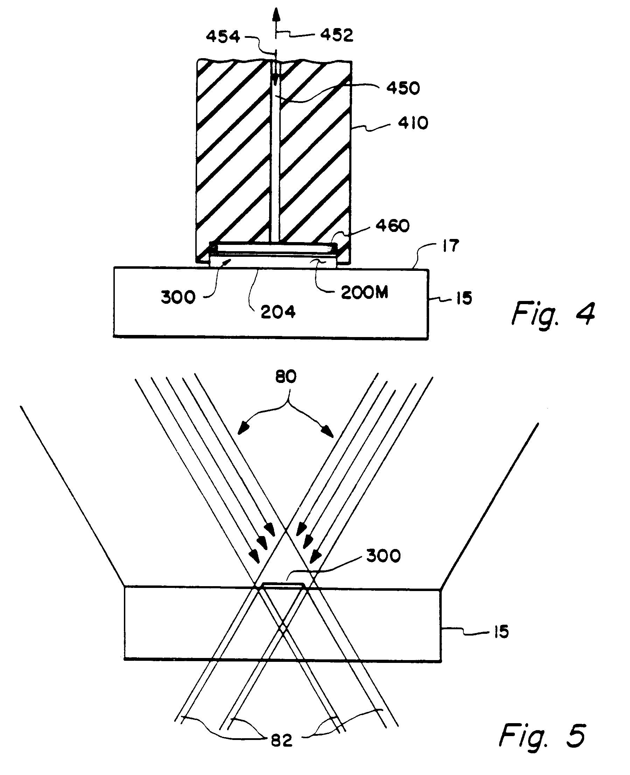

Figure 1 illustrates the components which comprise a ring laser angular rate sensor as specifically described by the aforementioned U.S. patents. Briefly, a mechanically and thermally stable block 10 has tunnels 12a, 12b, and 12c bored therethrough to form a triangular lasing cavity. Mirror assemblies 14a, 14b, and 14c each include a mirror substrate 15a, 15b, and 15c, respectively, and mirror coatings 16a, 16b, and 16c, respectively. Each of the mirror assembly substrates 15 are secured to the block 10 by a variety of techniques including optical contact, indium seal, epoxy, and thermally formed seals (frit seal). In Figure 1, substrate 15c is shown to have a large radius of curvature surface which includes mirror coating 16c which follows the contour of substrate 15c.

In the present invention, the mirror coatings are replaced by mirror chips which are secured to the mirror substrates 15 by a thermally sealable bonding agent. Illustrated in Figures 2 and 3 is a mirror assembly in accordance with the present invention. Figure 2 illustrates a mirror chip substrate comprised of a very thin silicon wafer 200 having a finished thickness "W" in the order of .003 - .005 inches after polishing. The back side of silicon wafer 200 identified as surface 204 is polished sufficient for receiving a thin film of a thermally sealable bonding agent 250 as will subsequently be described. Preferably after the bonding agent is applied to wafer 200, shown surface 202, thereof, is ultra-high polished for receiving mirror coatings thereon as will be described.

In the preferred embodiment, the thin film bonding agent 250 is comprised of a thin film of glass first deposited on surface 204 of mirror chip substrate 200 by vacuum-sputtered deposition. The glans or other bonding agent may also be deposited on substrate 200 by other suitable processes in order to provide a very thin and uniform film of the thermally sealable bonding agent 250. In one method of deposition, a glass is selected as a target in a vacuum chamber and sputtered onto mirror chip substrate surface 204 used as the workpiece. Examples of glasses which may be used, among others, are low thermal expansion glass such as Corning Glass No. 7723 and No. 7594 which are lead oxide glasses, or No. 0211 which is a borosilicate glass. The layer thickness of the vacuum-sputtered glass could range from less than one micron thick to about 10 microns for a satisfactory thermally sealable bonding agent. The layer thickness should be kept as low as possible to prevent deleterios effects caused by any mismatch in the thermal coefficients of the materials to be bonded together. The glass or other thermally sealable bonding agent is preferably chosen to have a melting point temperature to be as low as possible. Too high a melting point temperature may result in damage to the mirror materials during the bonding process.

Preferably, the thermally sealable bonding agent should have thermal characteristics which closely match the material of the wafer selected. Corning Glass No. 7723 was found to reasonably match the thermal characteristics of a silicon wafer. Of course, the greater the thickness, the greater will be the tendency to have thermal mismatch effects as will be discussed below.

After the bonding agent has been applied to the surface 204 of wafer 200 and surface 202 has been highly polished as aforesaid, a highly reflective multilayer dielectric coating, for example, alternate layers 212 and 214 of silicon dioxide and zirconium dioxide, respectively, are deposited on surface 202. These layers being the mirror material which form the mirror. Deposition of the dielectric coatings on the silicon wafer may be accomplished by any of the well known semiconductor or other processing techniques. Further, the deposition of the multilayer dielectric coatings may be accomplished by other techniques including ion beam, e-beam, or the like. However, standard semiconductor deposition techniques are believed to achieve the lowest cost.

It should be noted that the mirror chip substrate may alternatively be comprised of other materials such as thin wafers of fused quartz, Zerodur®, Cervit®, and any other material which will serve the intended function. The mirror chip need only be capable of allowing a mirror material to be deposited thereon. Further, the mirror chip substrate may be comprised of a wafer material which may be polished to provide the mirror function itself. However, the state-of-the-art of silicon polishing makes a silicon wafer the preferred choice since silicon polishing may be in the order of ten times greater than that of other materials such as fused quartz, or the like.

Subsequent to the polishing of the wafer and deposition of the mirror coating on the wafer, disc shaped mirror chips 210, as illustrated in Figure 3, are cut out from wafer 200 by a variety of techniques including laser trimming or etching. Figures 2 and 3 show the mirror chips as rectangular shaped, however any mirror chip shape is possible. The resulting mirror chips 210 include a wafer portion 200m which forms the mirror chip substrate, the bonding agent 250 on surface 204, and the mirror coatings on surface 202.

In order to provide low cost mirror chips, silicon wafer 200 may be in the order of 3 to 4 inches in diameter and the mirror chips are in the order of .04 square inches. Thus, a single wafer can produce many mirror chips on a single wafer. Many chips can be processed through each of the deposition process steps and include quality checks.

In the present invention, mirror chip 210 is bonded to mirror assembly substrate 15 by a thermal sealing process. End surface 301 of mirror assembly substrate 15 should be suitably polished for bonding chip 210 thereto. The degree of polishing required being much less than that required for optical contact. Substrate 15 and chip 210 including bonding agent 250 are heated together in a furnace to a temperature which causes the thermally sealable bonding agent film to fuse the mirror chip substrate 200m and substrate 15 together. With glass as the bonding agent, the temperature, of course, depends on the lower fusing temperature or softening-point of the glass selected. Successful results with glass have been obtained at furnace temperatures in the range of 450°C to 800°C.

Sputtered glass films containing lead oxide or other substances that couple well with microwaves may also be utilized as the bonding agent. In these circumstances, heating of the the leaded glass and the mating surfaces of the substrates may be accomplished by microwave heating.

It should be understood by those skilled in the art that the thermal characteristics of all of the materials utilized by the mirror assembly should be suitably matched and capable of withstanding the heating temperatures during the bonding or fusing process. Unmatched characteristics can cause fracturing and the like. It is paramount that the choice of dielectric coatings for the mirror function must be such to yield a superior mirror for laser angular rate sensors. Alternating layers of zirconium dioxide and silicon dioxide as a mirror coating may be an acceptable material to withstand the bonding temperatures and still provide a mirror coating with good characteristics suitable for laser angular rate sensors.

It should be understood that the thin film bonding agent should be as thin as possible to prevent degradation of the bond between the materials selected for the mirror chip substrate and the mirror assembly substrate.

It should be understood that the order of the process steps, as illustrated in preferred embodiments above, may be altered. For example, alternatively, the thermal bonding agent may be applied to surface 301 of mirror assembly substrate 15 instead of the wafer surface 204, or applied to both surfaces before bonding the surfaces together by the heating process.

Further, alternatively, the mirror chip could be polished and bonded to to the mirror assembly substrate 15 before the mirror coatings or dielectric materials are deposited upon the polished chip surface. The wafer itself may be polished before or after the thermal bonding agent is applied therto. As just indicated, there are many alternate ways of constructing the mirror assembly in accordance with the present invention.

The mirror assembly in accordance with the present invention provides a low cost construction and reliable mirror assembly to satisfy the object of the present invention.

## Claims

1. A mirror assembly comprising
a) a mirror chip including a first substrate (200M) having first (202) and second (204) oppositely facing surfaces, said first surface having at least one mirror material (212,214) deposited thereon to form a mirror;
b) a second substrate (15) having a first surface (301) for supporting said first substrate (200M); and
c) a thin film (250) of a thermally sealable bonding agent bonding together and in between said first surface (301) of said second substrate (15) and said second surface (204) of said first substrate (200M).

2. The mirror assembly of claim 1, wherein said first substrate (200M) is comprised of silicon.

3. The mirror assembly of claim 1 or 2, wherein said mirror material includes alternating layers (212,214) of dielectric materials.

4. The mirror assembly of claim 3, wherein said mirror material includes a plurality of alternating layers (212,214) of at least two dielectric materials deposited on said first surface (202) to form a highly reflective mirror.

5. The mirror assembly of claim 3 or 4, wherein said first substrate (200M) is comprised of silicon and said mirror material (212,214) is comprised of alternating layers of silicon dioxide and titanium dioxide.

6. The mirror assembly of claim 3 or 4, wherein said first substrate (200M) is comprised of silicon and said mirror material (212,214) is comprised of alternating layers of silicon dioxide and zirconium dioxide.

7. The mirror assembly according to one of the preceding claims, wherein said bonding agent is a film (250) of glass.

8. The mirror assembly of claim 7, wherein said bonding (250) agent is a vacuum sputtered glass film deposited on said second surface (204) of said first substrate (200M).

9. The mirror assembly of claim 7, wherein said bonding agent (250) is a vacuum sputtered glass film deposited on said first surface (301) of said second substrate (15).

10. A ring laser angular rate sensor comprising a mechanically and thermally stable block (10) having a plurality of interconnecting tunnels (12a,12b,12c) and at least one mirror assembly (15a-c,16a-c) according to one of the preceding claims, and wherein said second substrate (15) is positioned on said block (10) so that said mirror assembly intercepts one of said interconnecting tunnels (12a-12c).

## Patentansprüche

1. Spiegelanordnung mit
a) einem Spiegelplättchen, welches ein erstes Substrat (200M) mit ersten (202) und zweiten (204) einander gegenüberliegenden Oberflächen aufweist, auf deren erster Oberfläche zur Bildung eines Spiegels wenigstens ein Spiegelmaterial (212, 214) angebracht ist;
b) einem zweiten Substrat (15) mit einer ersten Oberfläche (301) zum Halten des ersten Substrats (200M); sowie
c) einem dünnen Film (250) aus einem thermisch aktivierbaren Klebemittel zwischen der ersten Oberfläche (301) des zweiten Substrats (15) und der zweiten Oberfläche (204) des ersten Substrats (200M), um diese miteinander zu verbinden.

2. Spiegelanordnung nach Anspruch 1, bei der das erste Substrat (200M) aus Silizium besteht.

3. Spiegelanordnung nach Anspruch 1 oder 2, bei der das Spiegelmaterial abwechselnde Schichten (212, 214) aus dielektrischem Material umfaßt.

4. Spiegelanordnung nach Anspruch 3, bei der das Spiegelmaterial eine Vielzahl abwechselnder Schichten (212, 214) aus wenigstens zwei dielektrischen Materialien besteht, welche auf der ersten Oberfläche (202) abgelagert sind, um einen hochreflektierenden Spiegel zu bilden.

5. Spiegelanordnung nach Anspruch 3 oder 4, bei der das erste Substrat (200M) aus Silizium besteht und das Spiegelmaterial (212, 214) aus abwechselnden Schichten von Siliziumdioxyd und Titandioxyd besteht.

6. Spiegelanordnung nach Anspruch 3 oder 4, bei der das erste Substrat (200M) aus Silizium besteht und das Spiegelmaterial (212, 214) aus abwechselnden Schichten von Siliziumdioxyd und Zirkondioxyd besteht.

7. Spiegelanordnung nach einem der vorangehenden Ansprüche, bei der das Klebemittel ein Glasfilm (250) ist.

8. Spiegelanordnung nach Anspruch 7, bei der das Klebemittel (250) ein Glasfilm ist, der im Vakuum auf die zweite Oberfläche (204) des ersten Substrats (200M) aufgesputtert ist.

9. Spiegelanordnung nach Anspruch 7, bei der das Klebemittel (250) ein Glasfilm ist, der im Vakuum auf die erste Oberfläche (301) des zweiten Substrats (15) aufgesputtert ist.

10. Ringlaserwinkelgeschwindigkeitsmesser mit einem mechanisch und thermisch stabilen Block (10), der eine Vielzahl miteinander in Verbindung stehender Tunnel (12a, 12b, 12c) sowie wenigstens eine Spiegelanordnung (15a bis c, 16a bis c) gemäß einem der vorangehenden Ansprüche aufweist und wobei daß zweite Substrat (15) derart an dem Block (10) befestigt ist, daß die Spiegelanordnung in der Fluchtlinie eines der Verbindungstunnel (12a bis 12c) liegt.

**Revendications**

1. Un ensemble de miroir comprenant:
a) une pastille de miroir comprenant un premier support (200M) comprenant des première (202) et seconde (204) surfaces opposées, ladite première surface étant pourvue d'au moins un matériau formant miroir (212, 214) déposé sur celle-ci pour constituer un miroir;
b) un second support (15) comprenant une première surface (301) pour supporter ledit premier support (200M); et
c) une couche mince (250) d'agent de liaison thermosoudable, liant ensemble ladite première surface (301) dudit second support (15) et ladite seconde surface (204) dudit premier support (200M) et placée entre les deux.

2. L'ensemble de miroir selon la revendication 1, dans lequel ledit premier support (200M) est composé de silicium.

3. L'ensemble de miroir selon la revendication 1 ou 2, dans lequel ledit matériau formant miroir comprend des couches alternées (212, 214) de matériaux diélectriques.

4. L'ensemble de miroir selon la revendication 3, dans lequel ledit matériau formant miroir comprend une pluralité de couches alternées (212, 214) d'au moins deux matériaux diélectriques déposées sur ladite première surface (202) de manière à former un miroir à haute réflectivité.

5. L'ensemble de miroir selon la revendication 3 ou 4, dans lequel ledit premier support (200M) est composé de silicium et ledit matériau formant miroir (212, 214) est composé de couches alternées de dioxyde de silicium et de dioxyde de titane.

6. L'ensemble de miroir selon la revendication 3 ou 4, dans lequel ledit premier support (200M) est composé de silicium et ledit matériau formant miroir (212, 214) est composé de couches alternées de dioxyde de silicium et de dioxyde de zirconium.

7. L'ensemble de miroir selon l'une des précédentes revendications, dans lequel ledit agent de liaison est une couche mince (250) de verte.

8. L'ensemble de miroir selon la revendication 7, dans lequel ledit agent de liaison (250) est une couche mince de verre vaporisée sous vide, déposée sur ladite seconde surface (204) dudit premier support (200M).

9. L'ensemble de miroir selon la revendication 7, dans lequel ledit agent de liaison (250) est une couche mince de verre vaporisée sous vide sur ladite première surface (301) dudit second support (15).

10. Un capteur de vitesse angulaire à laser annulaire comprenant un bloc mécaniquement et thermiquement stable (10), comprenant une pluralité de tunnels de liaison (12a, 12b, 12c) et, au moins, un ensemble de miroirs (15a à 15c, 16a à 16c) selon l'une des précédentes revendications, et dans lequel ledit second support (15) est disposé sur ledit bloc (10) de manière que ledit ensemble de miroirs intercepte l'un desdits tunnels de liaison (12a à 12c).

Fig. 1

Fig. 2

Fig. 3

Fig. 4

Fig. 5